# EUROPEAN PATENT SPECIFICATION

(11) **EP 4 502 404 B1**
(45) Date of publication and mention of the grant of the patent: **07.10.2026**
(21) Application number: 23189264.7
(22) Date of filing: 02.08.2023
(51) Int. Cl.: F16B 39/24, F16B 2/00, F16B 43/00

(54) **A WASHER FOR RECEIVING A COUNTER TORQUE FROM A TOOL**
UNTERLEGSCHEIBE ZUR AUFNAHME EINES GEGENDREHMOMENTS VON EINEM WERKZEUG
RONDELLE POUR RECEVOIR UN COUPLE ANTAGONISTE D'UN OUTIL

(43) Date of publication of application: 05.02.2025
(73) Proprietor: Growermetal S.p.A., 23885 Calco (LC) (IT)
(72) Inventor: Cattaneo, Paolo, 23885 Calco (LC) (IT)
(74) Representative: Kador & Partner Part mbB

(56) References cited:
- EP-B1- 3 083 146
- US-A1- 2009 142 155
- US-A1- 2020 166 071
- US-A1- 2020 400 184

## Description

The present invention relates to a washer for receiving a counter torque generated due to tightening or loosening of a threaded fastener assembly.

For tightening of threaded fastener assemblies, a certain torque is applied to a bolt head or a nut of the threaded fastener assembly using a tool, which, in turn, should translate into a well-defined tension of the threaded fastener. However, during tightening or loosening of a threaded fastener assembly, a counter torque can act on an operator via the tool, because of friction between a washer or a bearing and a bolt head and/or a nut of the threaded fastener and/or because of friction between the washer and a bearing and/or between the bolt thread and the nut thread. Especially when bigger threaded fastener assemblies are to be tightened, counter torque acting on an operator can constitute a considerably health hazard so that it is necessary to compensate for this counter torque.

Such a compensation can be implemented by, for example, a tool for applying fastening torque to the assembly, which comprises an extension arm cooperatively coupled to a surface of one of the work pieces intended to be kept together by the threaded fastener assembly, so that the counter torque is transferred and compensated by the work piece.

Alternatively, a washer may be used in the threaded fastener assembly which, on the one hand, in operation firmly holds to the surface (bearing) on one side of one of the work pieces, such as a flange, through which the threaded fastener extends and, on the other hand, is shaped in such a way that the tool for applying the torque to the nut or bolt head of the threaded fastener assembly can engage the washer so that the counter torque is further received and compensated by the work piece.

Such washer, also designated as "reaction washer" or "engaging washer" are described e.g. in EP 3 083 146 A1 or US 11,396,902 B2.

US 2009/142155 A1 relates to an anti-loosening unit, comprising at least one ringed plate, the ringed plate comprising an opening, formed in the central portion of the ringed plate; a plurality of slots, formed radially on a first surface of the ringed plate and around the opening, wherein the slots extend from the opening to the outer edge of the ringed plate; a plurality of cuneal structures, formed between the slots, each cuneal structure having a contact surface, wherein the contact surface is an inclined surface between two adjacent slots; and a plurality of protrusions, formed on a second surface of the ringed plate, the second surface corresponding to the first surface, wherein the protrusions are formed radially on the second surface.

The present invention intends to develop further such washers, and in particular aims at improving the grip of the washer on the surface of the work piece, i.e. at enhancing the torque which can be applied to the washer before it turns loose on its bearing.

Accordingly, the present invention is directed to a washer for receiving a counter torque generated due to tightening or loosening of a threaded fastener, comprising:
a body part that extends radially around a center axis of the washer;
a center bore within the body part, configured to encompass the threaded fastener, and aligned with the center axis; and
an outer peripheral part of the washer, configured to mechanically couple with a tool for receiving the counter torque, the outer peripheral part of the washer consisting of circumferentially spaced protrusions extending outwards from the washer to mechanically couple with the tool for receiving the counter torque, said circumferentially space protrusions forming castellations;
wherein a bottom surface of the outer peripheral part of the washer is configured by means of a first kind of friction coefficient increasing means to interact with a bearing surface for receiving the counter torque.

Advantageous modifications of the invention are stated in the dependent claims.

The "bottom surface" of the washer is understood to be the surface of the washer which is intended to, in operation, engage the work piece surface designated as bearing surface.

The "top surface" of the washer is understood to be the opposite surface of the washer intended, in operation, to engage the nut or bolt head underside of the threaded fastener assembly.

The "washer center axis" is an axis perpendicular to the washer plane and containing the washer center.

Usually, the outer peripheral part of the washer which is configured to mechanically couple with a tool for receiving the counter torque is not cylindrical symmetric with regard to the washer center axis.

Furthermore, usually the washer body part is the part of the washer which is fully cylindrical symmetric with regard to the washer center axis, i.e. it maps onto itself when rotated around the axis by any angle.

The washer according to the present invention comprises friction coefficient increasing means on the bottom surface of said outer peripheral part of the washer. The outer peripheral part of the washer is maximally spaced apart from the washer center axis in radial direction and so the friction coefficient enhancing means on this part of the washer bottom surface are most effective to increase friction between the washer and the bearing surface and hence to enhance grip of the washer on the bearing surface.

Friction coefficient enhancing means on surfaces of washers are, as such, well known because the resistance to loosening the threaded fastener assembly is determined by the friction between a top side of the washer and the bolt and/or the nut or the friction between the washer and the bearing on a work piece, so that a higher friction obtained by using such friction coefficient enhancing means increases the resistance to loosening the threaded fastener assembly.

In practice, when fastening a threaded fastener assembly a certain torque is applied to the bolt head and/or the nut, which, in turn, should translate into a well-defined tension. This, however, only applies for the case that also the friction between a bottom side of the washer and the bearing surface and/or flange surface and/or fastening surface to be engaged with and/or to interfere with it is well defined and sufficient.

In a preferred embodiment of the washer of the invention, the bottom surface of the body part of the washer according to the invention is also configured to interact with the bearing surface, by means of a second kind of friction coefficient increasing means.

In this embodiment the grip of the washer on the bearing is further enhanced.

The first kind of friction coefficient increasing means and/or the second kind of friction coefficient increasing means of the bottom surface of the washer can be any means, in particular can have any shape which enhances the friction between the washer and the bearing surface.

In a preferred embodiment, the first kind of friction coefficient increasing means and/or the second kind of friction coefficient increasing means of the bottom surface of the washer is structured and/or knurled and/or textured and/or serrated by means of a plurality of elongated elevations; and/or is structured by means of a plurality of elongated recesses.

The respective friction coefficient increasing means can hence comprise a respective kind of a structure and/or a texture and/or a pattern and/or a topography of the bottom surface of the body part and/or the outer peripheral part of the washer for increasing the friction coefficient between the bottom surface of the respective part of the washer and the bearing surface.

Furthermore, the first kind of friction coefficient increasing means may advantageously be present on whole area of the bottom surface of the outer peripheral part of the washer, and/or the second kind of friction coefficient increasing means may advantageously be present on whole area of the bottom surface of the body part of the washer.

Accordingly, according to an aspect, the bottom surface of the outer peripheral part of the washer can comprise, or consist of, the first kind of friction coefficient increasing means and/or a first kind of structure and/or a first kind of a texture and/or a first kind of a topography, to be configured for the interaction with the bearing surface for receiving the counter torque.

According to another aspect, the first kind of friction coefficient increasing means and the second kind of friction coefficient increasing means at the bottom side of the washer can be identical. They may extend evenly over both parts of the bottom side, e.g. over the entire bottom side, of the washer.

By using identical friction coefficient increasing means, the friction coefficient increasing means can be optimized to receive a high amount of counter torque.

The washer may or may not have a beveled portion on an inner periphery of its bottom surface.

It is furthermore preferred that each respective elevation of the first and/or the second friction coefficient increasing means on the bottom surface of the washer comprises, or consists of, a wedge and/or a tooth and/or a ridge and/or a serration.

According to an aspect, individual wages and/or individual teeth and/or individual ridges and/or individual elongated elevations comprise an edge distal to the bottom surface.

According to an aspect is proposed, that the elongated elevations have a symmetrical cross section and/or the elongated recesses have a symmetrical cross section.

This can protect the bearing surface independent from a torque direction affecting the washer.

Accordingly, the elongated elevations, such as the wedges, teeth, ridges or serrations, preferably have a symmetrical cross section and/or the elongated recesses have a symmetrical cross section, i.e. preferably, the teeth and/or the elongated elevations and/or the elongated recesses are designed so that they have a symmetrical shape with regard to a direction perpendicular to a washer plane in cross-sectional view of the respective structure.

Accordingly, according to an aspect it is proposed, that the teeth and/or the elongated elevations and/or the elongated recesses of the bottom surface of the outer peripheral part and/or the body part of the washer in cross-sectional view of their longitudinal direction have a shape symmetrical to the perpendicular bisector extending through a top of the teeth and/or extending through a top of the edge.

The teeth and/or the elongated elevations in cross-sectional view of their longitudinal direction may thus have a triangular shape and/or a rectangular shape.

In a cross-sectional view, the elongated elevation can have an approximately triangular shape with an angle of the flanks, building the triangle, of the elevation to a washer plane being 35 to 65°, more preferably from 40 to 60°, and most preferably from 45 to 55°, such as, e.g. 50°.

Preferably, top sections of the teeth and/or the elongated elevations of the bottom surface of the outer peripheral part and/or the body part of the washer in cross-sectional view of their longitudinal direction are rounded.

A radius of a rounded top section of the teeth and/or the elongated elevations of the bottom surface may be from 0.05 mm to 0.20 mm, or from 0.07 mm to 0.18 mm, or from 0.08 mm to 0.16 mm, or from 0.08 mm to 0.12 mm.

It is preferred that the rounded section makes up 30% to 70% of the total height of the teeth, more preferably 40 to 60 % and most preferably 45 to 45 %, such as 50%.

This way, no sharp edges of the friction coefficient increasing means of the washer protrude toward the bearing and grip them during tightening.

For example, the top section of the elevation, having a triangular or rectangular shape in a cross-sectional view, can start at 50% of the elevations height, and can be rounded, for example with a radius of 0.05 mm to 0.08 mm.

Preferably, the first and/or the second kind of friction coefficient increasing means of the bottom surface of the outer peripheral part of the washer and/or the body part of the washer are configured as serrations and/or comprise, or consist of, a plurality of teeth.

Preferably, a height of the teeth and/or the elongated elevations and/or the elongated recesses, i.e. maximum dimension of the respective structure in direction perpendicular to the washer plane, is from 0.125 mm to 0.25 mm, more preferably is from 0.13 mm to 0.24 mm and most preferably is from 0.14 mm to 0.23 mm, such as from 0.15 mm to 0.20 mm.

Furthermore, preferably, the teeth and/or the elongated elevations and/or the respective structures are not directly adjacent to each other but between the respective structures are arranged planar sections.

The number of teeth and/or the elongated elevations and/or the elongated recesses arranged at the bottom surface is preferably between 1.0 and 2.0 per mm, more preferably from 1.1 to 1.9 per mm of a circumference of the center bore of the washer. For example, an 1" inch washer size usually has a circumference of the center bore of about 89.5 mm and the number of teeth is 98, so that per mm of the respective circumference 1.1 teeth are present.

Preferably, the elongated elevations and/or the elongated recesses and/or the teeth of the bottom surface of the outer peripheral part and/or the body part of the washer, in plan view of the bottom surface of the washer, extend longitudinally in a direction from an inner to an outer margin of the bottom washer surface and/or from an inner to an outer circumference of the bottom washer surface, and more preferably fully extend from the inner to the outer margin of the bottom washer surface and/or fully extend from an inner to an outer circumference of the bottom washer surface.

According to an aspect, the longitudinal direction of the teeth and/or the elongated elevations and/or the elongated recesses of the bottom surface of the outer peripheral part and/or the body part of the washer coincides with straight lines.

In one aspect, the longitudinal direction of the teeth and/or the elongated elevations and/or the elongated recesses of the bottom surface of the outer peripheral part and/or the body part of the washer is extended outwards in respect to the center axis of the washer and inclined counterclockwise in respect to a radial direction at the bottom surface of the washer. For example, the longitudinal direction of the teeth and/or the elongated elevations and/or the elongated recesses of the bottom surface of the outer peripheral part and/or the body part of the washer is extended straight outwards in respect to the center axis of the washer and inclined counterclockwise in respect to a radial direction at the bottom surface of the washer.

Counterclockwise inclination of the, preferably straight, longitudinal direction of the teeth and/or the elongated elevations and/or the elongated recesses of the bottom surface of the outer peripheral part and/or the body part of the washer is preferred for washers intended to be used with fastener assemblies which comprise a right-handed thread, so that the nut runs clockwise when the threaded fastener assembly is tightened. The vast majority of threaded fastener comprise right-hand threads.

As immediately apparent to the skilled person, for washers intended to be used with fastener assemblies which comprise a left-handed thread, so that the nut runs counterclockwise when the threaded fastener assembly is tightened, the longitudinal direction of the teeth and/or the elongated elevations and/or the elongated recesses of the bottom surface of the outer peripheral part and/or the body part of the washer is extended, preferably straight, outwards in respect to the center axis of the washer and inclined counterclockwise in respect to a radial direction at the bottom surface of the washer.

In general, where herein elements of the washer according to the invention are described which are adapted for the use with fastener assemblies which comprise a right-handed thread, these elements may be adapted to have the same effect in washers according to the invention intended for the use with fastener assemblies which comprise a left-handed thread, as easily apparent for the skilled person.

An angle of inclination defined as being the angle between radially extending straight lines originating from the center of the washer and the teeth and/or the elongated elevations and/or the elongated recesses in top view of the bottom surface of the washer can extend from 40 to 80°, preferably from 50 to 70°, and more preferably from 55 to 65°, such as e.g. 60°.

In a preferred aspect, the longitudinal direction of the teeth and/or the elongated elevations and/or the elongated recesses of the bottom surface of the outer peripheral part and/or the body part of the washer coincides with radially extending straight lines originating from the center axis of the washer.

According to an aspect, the teeth and/or the elongated elevations of the bottom surface of the outer peripheral part and/or the body part of the washer, particularly building the structured and/or knurled and/or the textured and/or the serrated bottom surface of the washer, are arranged separated from each other, particularly by means of a planar section at the bottom surface of the washer arranged between each tooth and/or each elongated elevation.

This can mean that the teeth and/or the elongated elevations of the bottom surface of the outer peripheral part and/or the body part of the washer are arranged adjacent to a planar interim section, wherein the planar interim section is a planar section of a washer surface.

Preferably, both the bottom surface of the outer peripheral part and the bottom surface of the body part of the washer are configured as serrations comprising a plurality of teeth. Preferably, the teeth of the bottom surface of the outer peripheral part and those of the body part merge seamlessly.

For example, the second kind of friction increasing means, such as teeth, at the bottom surface of the body part of the washer may correspond to the first kind of friction increasing means at the bottom surface of the outer peripheral part of the washer and may be configured to extend seamlessly and/or flat outwards in respect to the center axis of the washer from the bottom surface of the body part of the washer to the bottom surface of the outer peripheral part of the washer, preferably from the inner periphery of the bottom surface of the body part of the washer to the outer margin of the bottom surface of the outer peripheral part of the washer.

This can mean that the complete bottom surface of the washer is covered by one kind of friction coefficient increasing means.

According to an aspect, a circumferential surface of an outer edge of the outer peripheral part of the washer is formed perpendicular to the bottom surface of the washer, particularly is not tapered, with respect to the bottom surface of the washer.

Thus, the circumferential surface of the outer edge of the outer peripheral part of the bottom surface of the washer in use engages the bearing when the threaded fastener assembly is tightened or tight.

In this embodiment, the first kind of friction coefficient increasing means of the bottom surface of the outer peripheral part of the washer may extend to the maximum distance from the washer center and hence increase the grip of the washer on the work piece.

Usually, the outer peripheral part of the washer which is configured to mechanically couple with a tool for receiving the counter torque is not cylindrical symmetric with regard to the washer center axis, i.e. does not map on itself when rotated by any arbitrary angle.

The outer peripheral part of the washer can thus be configured by a shape such as a contour of the outer peripheral part of the washer and/or a structure of the outer peripheral part of the washer and/or cutouts of the outer peripheral part of the washer for mechanical coupling to the tool for receiving the counter torque.

The configuration of the outer peripheral part consists of circumferentially spaced protrusions extending outwards from the washer in axial direction to mechanically couple with the tool for receiving the counter torque. Such protrusions are also called castellations or castles.

The outer peripheral part of the washer may be axially (in a strict sense, i.e. not cylindrically) symmetric to the center axis of the washer, so that it maps onto itself when rotated around the axis by a specific angle (not any angle).

For example, the outer peripheral part of the washer may be axially symmetric to the center axis of the washer when rotated around the axis by an angle of from 10 to 50 °, or from 15 to 40°.

In accordance with the embodiment of the washer with a circumferential surface of an outer edge of the outer peripheral part of the washer formed perpendicular to the bottom surface of the washer, particularly to not be tapered, with respect to the bottom surface of the washer, the surfaces of the outer edges of circumferentially spaced protrusions extending outwards from the washer in axial direction, which represent the circumferential surface of an outer edge of the outer peripheral part of the washer in this embodiment, are not tapered, with regard to the bottom surface of the washer.

A part of an actuated tool for fastening the threaded fastener may engage with the outer peripheral part of the washer for receiving the counter torque that is generated due to tightening or loosening of the threaded fastener. Thus, torque exerted on the user by the part of the tool held by the user generated when tightening or loosening the threaded fastener assembly is avoided.

Preferably, the washer comprises a top surface facing the nut or bolt head underside of the threaded fastener assembly; and wherein a top surface of the outer peripheral part and/or a top surface of the body part of the washer comprises a third kind of friction coefficient increasing means, particularly to prevent vibrational rotation of the tight threaded fastener.

The top surface of the washer can be arranged at the opposite side of the bottom surface of the washer.

The third kind of friction coefficient increasing means can be configured independently in any one of the embodiments as described herein for the first and/or second kind of friction coefficient increasing means.

According to an aspect, the third kind of friction coefficient increasing means are a third kind of teeth structures and/or a third kind of elongated elevations protruding from the top surface of the washer in a direction aligned with the center axis; and wherein each tooth and/or each elongated elevation is structured as a wedge with an edge distal to the top surface, the distal edge extending in a radial direction of the washer.

According to a further aspect, the distal edge of the third kind of teeth structures and/or the distal edge of the wedge is extended straight outwards in respect to the center axis of the washer and inclined clockwise in respect to the radial direction on the top surface of the washer. This applies for washers intended to be used with fastener assemblies which comprise a right-handed thread.

For washers intended to be used with fastener assemblies which comprise a left-handed thread, in this aspect the distal edge of the third kind of teeth structures and/or the distal edge of the wedge is extended straight outwards in respect to the center axis of the washer and inclined counterclockwise in respect to the radial direction on the top surface of the washer.

According to an aspect is proposed that each wedge comprises two plain faces, which are sloped in respect to the top surface of the washer, forming the distal edge; and wherein the plane faces comprise different slopes in such a way as to have a greater tendency to inhibit rotation of a nut and/or a bolt head of the threaded fastener relative to the washer against a loosening direction than on a tightening direction of rotation.

For example, the top surface of the washer may comprise a serration which comprises between 0.8 and 1.2, preferably 0.85 and 1.15 saw teeth per mm of inner circumference of the washer. For example, a 1" washer usually has an inner circumference of about 89.5 mm and the number of saw teeth is 98, so that per mm of inner circumference 1.08 saw teeth are present.

The saw teeth are preferably equally spaced.

Preferably, the extension of each the saw teeth along an inner circumference of the washer (when extended over a chamfer to the inner circumference) is from 0.8 to 1.2 mm, more preferably from 0.85 to 1.15 mm.

As usually threaded fastener assemblies comprise right-handed threads and have to be rotated clockwise to tighten, the tightening direction of the washer in this case is counterclockwise, and the untightening direction of the washer is clockwise.

The washer according to the invention preferably comprises a beveled portion (chamfer) on the inner periphery of the top surface of the washer.

The beveled portion, on the one hand, avoids an interference of the inner part of the top surface of the washer with a thickened part of the bolt head, which can be present where the bolt under head is connected to the shaft of the bolt. In addition, it allows the user to more easily determine which surface of the washer should be applied to the bolt head or nut and which one to the bearing.

The washer may or may not include a beveled portion (chamfer) on the outer periphery of the top surface.

Preferably, the beveled portion makes up at most 30 % of the width of the washer surface, preferably at most 20% of the width of the washer surface.

The chamfer preferably has a planar surface.

Furthermore, the beveled section forms an angle with the top surface of the washer from 20 to 70°, more preferably from 30 to 60°, and most preferably of from 35 to 49 °, such as e.g. 45°.

The chamfer preferably penetrates to a depth into the washer of up to 50% of the washer thickness, more preferably of up to 40%, and most preferably of up to 30 %.

The radius of the rounded top section of the saw teeth on the top surface preferably is from 0.10 mm to 0.40 mm, more preferably is from 0.12 mm to 0.35 mm, and most preferably is from 0.17 to 0.32 mm.

Furthermore, it is preferred that also the section between the steep flanks of the saw teeth and the washer surface is rounded. Preferably, the radius is smaller than 0.15 mm, more preferably smaller than 0.12 mm.

In the washer of the invention, the top sections of the edges of both the saw teeth on the top surface and the teeth on the bottom surface seen in cross-sectional view of the teeth are rounded.

The washer according to the invention may have a superficial
and core hardness of 38 to 50 HRC, e.g. 39 to 48 HRC or 40 to 45 HRC.

All Rockwell ("HRC") hardnesses mentioned herein are measured according to ISO 6508-1, year 2016 edition.

To the washer, different surface coatings may be applied, such as, e.g., Mechanical zinc plating or Zinc-flake coating.

The washer can have a flat shape, i.e. the washer surfaces are parallel to a plane comprising the washer and its center.

However, the washer may also have a conical shape i.e. the washer surfaces are parallel to a cone with its axis going through the center of the washer.

A "washer plane" as mentioned hereinabove is then a tangential plane to the washer surface.

### Reference numbers

- 100, 200, 300, 400: washer
- 102: center line
- 105: center bore
- 110: body part
- 115, 215, 315, 415: first kind of friction coefficient increasing means
- 120: outer peripheral part
- 125, 225, 325, 425: friction coefficient increasing means
- 130: protrusion
- 135: outer surface
- 140, 240: elevation
- 150, 250: planar sector
- 310: inner diameter
- 320: outer diameter
- 330, 430: third kind of friction coefficient increasing means
- 350: chamfer

### Brief description of the drawings

The accompanying drawings, which are included to provide a further understanding of the invention and are incorporated in and constitute a part of this application, illustrate embodiments of the invention and together with the description serve to explain the principle of the invention. The figures display:
- Figure 1a,: b an isometric top view to a bottom surface of a washer with friction coefficient increasing means;
- Figure 2: an isometric top view to a bottom surface of a washer with another friction coefficient increasing means;
- Figure 3: an isometric top view to a top surface of a washer with friction coefficient increasing means; and
- Figure 4: an isometric top view to a bottom surface of a washer with another friction coefficient increasing means.

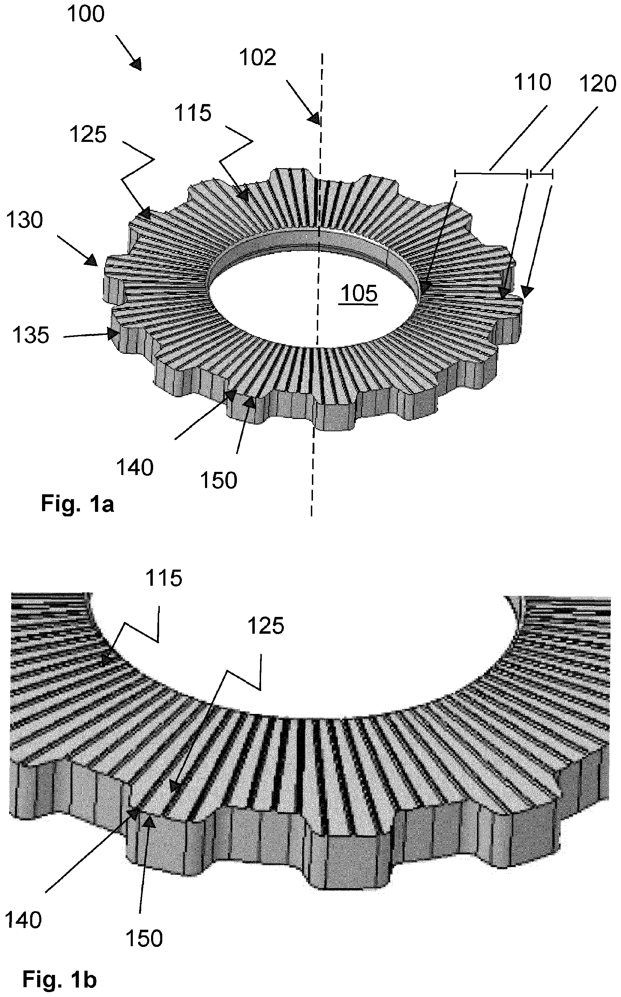

Figure 1a schematically sketches an isometric top view to a bottom surface 115, 125 of a washer 100 for receiving a counter torque generated due to tightening or loosening of a threaded fastener. The washer 100 comprises a body part 110 and an outer peripheral part 120. The body part 110 extends radially around a center axis 102 of the washer 100. A center bore 105 within the body part 110 is configured to encompass the threaded fastener and the center bore 105 is aligned with the center axis 102. The outer peripheral part 120 of the washer 100 is configured to mechanically couple with a tool for receiving the counter torque. A bottom surface of the outer peripheral part 125 of the washer 100 is configured by means of a first kind of friction coefficient increasing means to interact with a bearing surface for receiving the counter torque.

A bottom surface of the body part 115 of the washer 100 is configured to interact with the bearing surface by means of a second kind of friction coefficient increasing means, wherein in figure 1a the first kind of friction coefficient increasing means is identical to the second kind of friction coefficient means and a structure or a texture or a serration or a knurling of the friction coefficient means at the bottom surface of the body part 115 and at the bottom surface of the outer peripheral part 125 of the washer 100 merge seamlessly.

The first kind of friction coefficient increasing means and/or the second kind of friction coefficient increasing means of the bottom surface 115, 125 of the washer 100 is structured and/or knurled and/or textured and/or serrated by means of a plurality of elongated elevations 140.

The top sections of the elongated elevations 140 of the bottom surface of the outer peripheral part 125 and the body part 115 of the washer 100 in cross-sectional view of their longitudinal direction are rounded. The elongated elevations 140 of the bottom surface of the outer peripheral part 125 and the body part 115 of the washer 100 are building the structured or knurled or the textured or the serrated bottom surface 115, 125 of the washer 100, are arranged separated from each other by means of a planar section 150 at the bottom surface 115, 125 of the washer 100 arranged between each pair of elongated elevations 140.

A circumferential surface 135 of an outer edge of the outer peripheral part 120 of the washer 100, for mechanical coupling with a tool for receiving the counter torque, is formed perpendicular to the bottom surface 115, 125 of the washer 100 to not be tapered with respect to the bottom surface of the outer peripheral part 125 of the washer 100.

The configuration of the outer peripheral part comprises circumferentially spaced protrusions 130 extending outwards from the washer 100 to mechanically couple with the tool for receiving the counter torque and the protrusions 130 are configured to engage with fingers of the tool for receiving the counter torque to inhibit rotation of the washer 100 in respect to the tool for fastening the threaded fastener.

Figure 1b schematically sketches an isometric top view to the bottom surface of the washer 100 as a portion enlargement of figure 1a to closer sketch the elongated elevations 140 and the planar sections 150 at the bottom surface of the body part 110 and the outer peripheral part 120 of the washer 100.

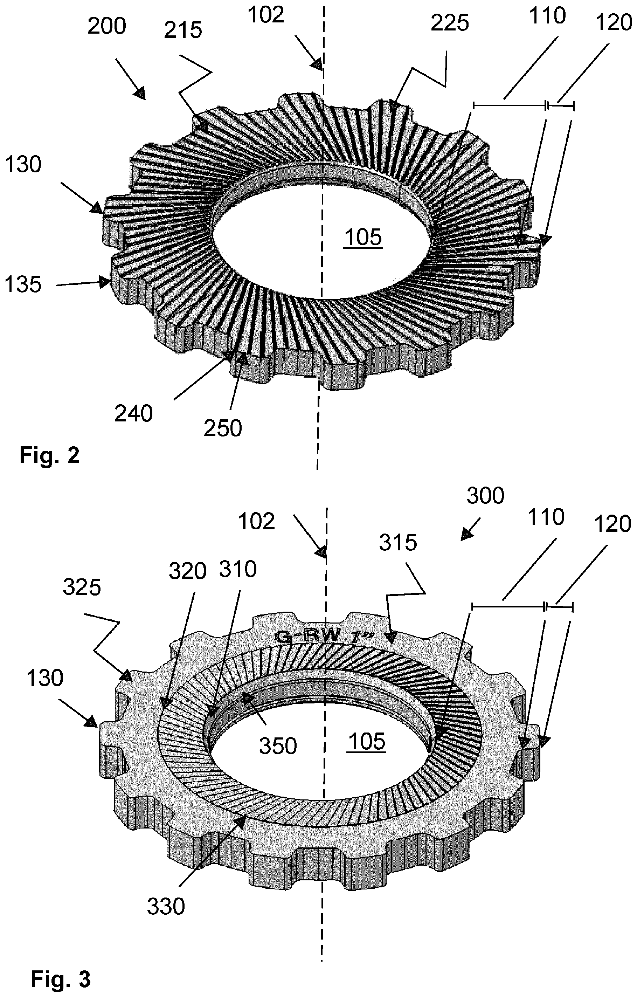

Figure 2 schematically sketches an isometric top view to a bottom surface of a washer 200 and corresponds to the schematically sketched washer 100 of figure 1a, with the difference that the longitudinal direction of the elongated elevations 240 of the bottom surface of the outer peripheral part 225 and/or the body part 215 of the washer 200 is extended straight outwards in respect to the center axis 102 of the washer 200 and inclined counterclockwise in respect to a radial direction at the bottom surface 215, 225 of the washer 200. The washer described is intended to be used with threaded fastener assemblies including right-handed threads; for washers intended to be used with threaded fastener assemblies including left-handed threads the inclination would be clockwise.

Figure 3 schematically sketches an isometric top view to a top surface of a washer 300 having a body part 110 and an outer peripheral part 120, wherein the washer 300 comprises a top surface facing a bottom side. The top surface of the body part 315 of the washer 300 comprises a third kind of friction coefficient increasing means 330, partially covering the top surface, particularly to prevent vibrational rotation of the tight threaded fastener. The third kind of friction coefficient increasing means comprise a third kind of elongated elevations 330 protruding from the top surface of the washer in a direction aligned with the center axis 102. Each elongated elevation is structured as a wedge with an edge distal to the top surface, wherein the distal edge is extending in a direction, which is inclined clockwise with respect to a radial direction of the washer 300.

The elongated elevations 330 can form a serration on the top surface of the washer 300 comprising a saw tooth structure. The saw wedges or saw teeth can be characterized in that in a cross-sectional view of the serration the teeth or wedges are asymmetrical with regard to a plane perpendicular to the washer surface going through the highest extension of the saw tooth or wedge, i.e. they have a flank with smaller angle (flatter flank) and a flank with a bigger angle (steep flank) with respect to a washer plane. The washer plane is a plane, which is parallel to the surfaces of the washer 300.

The saw teeth or saw wedges are arranged so that they enable rotation in direction of tightening of the bolt (also denoted as tightening direction) more easily than in the untightening rotational direction (also denoted as untightening direction), i.e. an under head of a bolt head or not can slide on the flatter flanks of the saw teeth when the threaded fastener is tightened. Thus, the friction in the tightening direction is lower than the friction caused in the untightening direction. The saw teeth of the saw teeth structure 330 are directly adjacent to each other so that there is no planar section of the washer surface between the saw teeth.

It is preferred that the angle between the flatter flank of the saw teeth and the plane perpendicular to the washer surface going through the highest extension of the saw tooth is from 2 to 20°, more preferably, is from 4 to 15°, and most preferably, is from 6 to 12°.

Furthermore, it is preferred that the angle between the steep flank of the saw teeth and the plane perpendicular to the washer surface going through the highest extension of the saw tooth is from 55 to 75°, more preferably is from 58 to 72°, and most preferably is 60 to 70°.

Preferably, the height of saw teeth, i.e. maximum dimension of the saw teeth in direction perpendicular to the washer plane, is from 0.12 to 0.25 mm, more preferably is from 0.13 to 0.24 mm and most preferably is from 0.13 to 0.23 mm, such as from 0.15 to 0.20 mm.

The washer 300 comprises a beveled portion (chamfer) 350 on an inner periphery of the top surface.

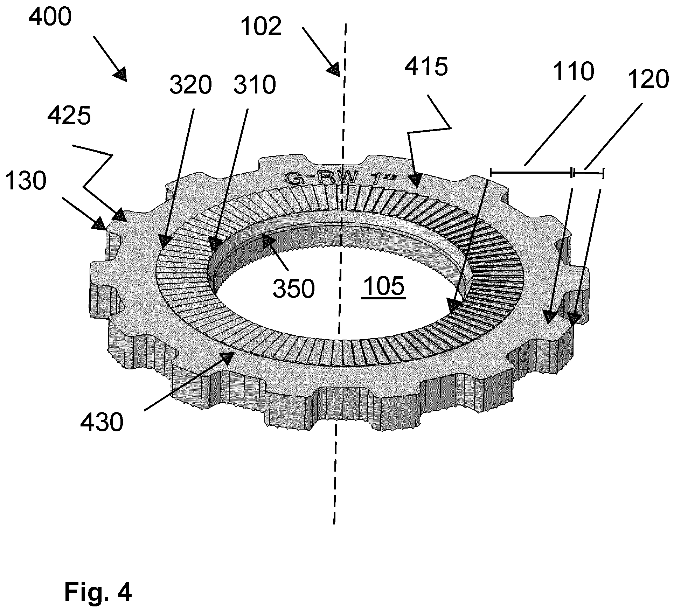

Figure 4 schematically sketches an isometric top view to a top surface of a washer 400 according to the washer 300 of figure 3. It differs from washer 300 of figure 3 in that the distal edge of the wedge of the elongated elevations 430 are extending straight in a radial direction of the washer.

## Claims

1. A washer (100, 200, 300, 400) for receiving a counter torque generated due to tightening or loosening of a threaded fastener, comprising:
a body part (110) that extends radially around a center axis (102) of the washer (100, 200, 300, 400);
a center bore (105) within the body part (110), configured to encompass the threaded fastener, and aligned with the center axis (102); and
an outer peripheral part (120) of the washer (100, 200, 300, 400), configured to mechanically couple with a tool for receiving the counter torque, the outer peripheral part (120) of the washer (100, 200, 300, 400) consisting of circumferentially spaced protrusions (130) extending outwards from the washer (100, 200, 300, 400) to mechanically couple with the tool for receiving the counter torque, said circumferentially space protrusions (130) forming castellations; **characterized in that**
a bottom surface of the outer peripheral part (125) of the washer (100, 200, 300, 400) is configured by means of a first kind of friction coefficient increasing means to interact with a bearing surface for receiving the counter torque.

2. The washer (100, 200, 300, 400) according to claim 1, wherein furthermore a bottom surface of the body part (115) of the washer is configured to interact with the bearing surface by means of a second kind of friction coefficient increasing means.

3. The washer (100, 200, 300, 400) according to claim 1 or 2, wherein the first kind of friction coefficient increasing means and/or the second kind of friction coefficient increasing means of the bottom surface of the washer (115, 125) is structured and/or knurled and/or textured and/or serrated by means of a plurality of elongated elevations (140); and/or by means of a plurality of elongated recesses.

4. The washer (100, 200, 300, 400) according to claim 3, wherein each respective elevation (140) comprise a wedge and/or a tooth and/or a ridge and/or a serration.

5. The washer (100, 200, 300, 400) according to claim 3 or 4, wherein the elongated elevations (140) have a symmetrical cross section and/or the elongated recesses have a symmetrical cross section.

6. The washer (100, 200, 300, 400) according to claim 3 to 5, wherein in plan view of the bottom surface of the washer (115, 125) the elongated elevations (140) and/or the elongated recesses and/or the teeth of the bottom surface of the outer peripheral part (125) and/or the body part (115) of the washer extend longitudinally in a direction from an inner to an outer margin of the bottom surface of the washer (115, 125) and/or from an inner to an outer circumference of the bottom surface of the washer (115, 125), and preferably fully extend from the inner to the outer margin of the bottom washer surface and/or fully extend from an inner to an outer circumference of the bottom washer surface.

7. The washer (100, 200, 300, 400) according to claim 6, wherein the longitudinal direction of the teeth and/or the elongated elevations and/or the elongated recesses of the bottom surface of the outer peripheral part and/or the body part of the washer coincides with straight lines.

8. The washer (100, 200, 300, 400) according to claim 6 or 7, wherein the longitudinal direction of the teeth and/or the elongated elevations and/or the elongated recesses of the bottom surface of the outer peripheral part and/or the body part of the washer coincides with radially extending straight lines originating from the center axis (102) of the washer (100, 200, 300, 400).

9. The washer (100, 200, 300, 400) according to claim 3 to 8, wherein the teeth and/or the elongated elevations (140) in cross-sectional view of their longitudinal direction have a triangular shape and/or a rectangular shape.

10. The washer (100, 200, 300, 400) according to any one of the claims 3 to 9, wherein top sections of the teeth and/or the elongated elevations (140) of the bottom surface of the outer peripheral part (125) and/or the body part (115) of the washer (100, 200, 300, 400) in cross-sectional view of their longitudinal direction are rounded.

11. The washer (100, 200, 300, 400) according to any one of the claims 3 to 10, wherein the teeth and/or the elongated elevations (140) of the bottom surface of the outer peripheral part (125) and/or the body part (115) of the washer, particularly building the structured and/or knurled and/or the textured and/or the serrated bottom surface of the washer, are arranged separated from each other, particularly by means of a planar section (150) at the bottom surface (115, 125) of the washer arranged between each tooth and/or each elongated elevation (140).

12. The washer (100, 200, 300, 400) according to any one of claims 3 to 11, wherein both the bottom surface of the outer peripheral part (125) and the bottom surface of the body part (115) of the washer are configured as serrations comprising a plurality of teeth; and wherein the teeth of the bottom surface of the outer peripheral part (125) and those of the body part (125) merge seamlessly.

13. The washer (100, 200, 300, 400) according to any one of the preceding claims, wherein a circumferential surface (135) of an outer edge of the outer peripheral part of the washer (100, 200, 300, 400) is formed perpendicular to the bottom surface (115, 125) of the washer, particularly to not be tapered with respect to the bottom surface (115, 125) of the washer.

14. The washer (100, 200, 300, 400) according to any one of the preceding claims, wherein the protrusions (130) are configured to engage with fingers of the tool for receiving the counter torque to inhibit rotation of the washer (100, 200, 300, 400) in respect to the tool.

15. The washer (100, 200, 300, 400) according to any one of the preceding claims, wherein the washer (100, 200, 300, 400) comprises a top surface facing the nut or bolt head underside of the threaded fastener assembly; and wherein a top surface of the outer peripheral part (325) and/or a top surface of the body part (325) of the washer (100, 200, 300, 400) comprises a third kind of friction coefficient increasing means (330, 430), particularly to prevent vibrational rotation of the tight threaded fastener assembly.

## Patentansprüche

1. Unterlegscheibe (100, 200, 300, 400) für das Empfangen eines Gegenmoments, das durch das Anziehen oder Lösen eines mit einem Gewinde versehenen Befestigungselements erzeugt wird, umfassend:
einen Körperteil (110), der sich radial um eine Mittenachse (102) der Unterlegscheibe (100, 200, 300, 400) erstreckt,
eine Mittenbohrung (105) in dem Körperteil (110), die konfiguriert ist, um das mit einem Gewinde versehene Befestigungselement zu umgeben, und mit der Mittenachse (102) ausgerichtet ist, und
einen Außenumfangsteil (120) der Unterlegscheibe (100, 200, 300, 400), der konfiguriert ist, um mechanisch mit einem Werkzeug für das Empfangen des Gegenmoments gekoppelt zu werden, wobei der Außenumfangsteil (120) der Unterlegscheibe (100, 200, 300, 400) aus entlang des Umfangs beabstandeten Vorsprüngen (130) besteht, die sich von der Unterlegscheibe (100, 200, 300, 400) nach außen erstrecken, um mechanisch mit dem Werkzeug für das Empfangen des Gegenmoments gekoppelt zu werden, wobei die entlang des Umfangs beabstandeten Vorsprünge (130) ein kastelliertes Profil bilden, **dadurch gekennzeichnet, dass**:
eine untere Fläche des Außenumfangsteils (125) der Unterlegscheibe (100, 200, 300, 400) durch eine erste Art von den Reibungskoeffizienten vergrößernden Einrichtungen konfiguriert ist, um mit einer Lagerfläche für das Empfangen des Gegenmoments zu interagieren.

2. Unterlegscheibe (100, 200, 300, 400) nach Anspruch 1, wobei weiterhin eine untere Fläche des Körperteils (115) der Unterlegscheibe durch eine zweite Art von den Reibungskoeffizienten vergrößernden Einrichtungen konfiguriert ist, um mit der Lagerfläche zu interagieren.

3. Unterlegscheibe (100, 200, 300, 400) nach Anspruch 1 oder 2, wobei die erste Art von den Reibungskoeffizienten vergrößernden Einrichtungen und/oder die zweite Art von den Reibungskoeffizienten vergrößernden Einrichtungen der unteren Fläche der Unterlegscheibe (115, 125) durch eine Vielzahl von länglichen Erhebungen (140) und/oder durch eine Vielzahl von länglichen Vertiefungen strukturiert und/oder gerändelt und/oder texturiert und/oder geriffelt sind.

4. Unterlegscheibe (100, 200, 300, 400) nach Anspruch 3, wobei jede entsprechende Erhebung (140) einen Keil und/oder einen Zahn und/oder einen Grat und/oder eine Riffelung umfasst.

5. Unterlegscheibe (100, 200, 300, 400) nach Anspruch 3 oder 4, wobei die länglichen Erhebungen (140) einen symmetrischen Querschnitt aufweisen und/oder die länglichen Vertiefungen einen symmetrischen Querschnitt aufweisen.

6. Unterlegscheibe (100, 200, 300, 400) nach einem der Ansprüche 3 bis 5, wobei in einer Draufsicht auf die untere Fläche der Unterlegscheibe (115, 125) sich die länglichen Erhebungen (140) und/oder die länglichen Vertiefungen und/oder die Zähne der unteren Fläche des Außenumfangsteils (125) und/oder des Körperteils (115) der Unterlegscheibe in der Längsrichtung in einer Richtung von einem inneren zu einem äußeren Rand der unteren Fläche der Unterlegscheibe (115, 125) und/oder von einem inneren zu einem äußeren Umfang der unteren Fläche der Unterlegscheibe (115, 125) erstrecken und sich vorzugsweise vollständig von dem inneren zu dem äußeren Rand der unteren Fläche der Unterlegscheibe erstrecken und/oder sich vollständig von einem inneren zu einem äußeren Umfang der unteren Fläche der Unterlegscheibe erstrecken.

7. Unterlegscheibe (100, 200, 300, 400) nach Anspruch 6, wobei die Längsrichtung der Zähne und/oder der länglichen Erhebungen und/oder der länglichen Vertiefungen der unteren Fläche des Außenumfangsteils und/oder des Körperteils der Unterlegscheibe mit geraden Linien zusammenfallen.

8. Unterlegscheibe (100, 200, 300, 400) nach Anspruch 6 oder 7, wobei die Längsrichtung der Zähne und/oder der länglichen Erhebungen und/oder der länglichen Vertiefungen der unteren Fläche des Außenumfangsteils und/oder des Körperteils der Unterlegscheibe mit sich radial erstreckenden geraden Linien, die von der Mittenachse (102) der Unterlegscheibe (100, 200, 300, 400) ausgehen, zusammenfallen.

9. Unterlegscheibe (100, 200, 300, 400) nach einem der Ansprüche 3 bis 8, wobei die Zähne und/oder die länglichen Erhebungen (140) in einer Querschnittansicht ihrer Längsrichtung eine dreieckige Form und/oder eine rechteckige Form aufweisen.

10. Unterlegscheibe (100, 200, 300, 400) nach einem der Ansprüche 3 bis 9, wobei die oberen Abschnitte der Zähne und/oder der länglichen Erhebungen (140) der unteren Fläche des Außenumfangsteils (125) und/oder des Körperteils (115) der Unterlegscheibe (100, 200, 300, 400) in einer Querschnittansicht ihrer Längsrichtung gerundet sind.

11. Unterlegscheibe (100, 200, 300, 400) nach einem der Ansprüche 3 bis 10, wobei die Zähne und/oder die länglichen Erhebungen (140) der unteren Fläche des Außenumfangsteils (125) und/oder des Körperteils (115) der Unterlegscheibe, die insbesondere die strukturierte und/oder gerändelte und/oder texturierte und/oder geriffelte untere Fläche der Unterlegscheibe bilden, separat voneinander angeordnet sind, insbesondere mittels eines planaren Abschnitts (150) an der unteren Fläche (115, 125) der Unterlegscheibe, der zwischen jedem Zahn und/oder jeder länglichen Erhebung (140) angeordnet ist.

12. Unterlegscheibe (100, 200, 300, 400) nach einem der Ansprüche 3 bis 11, wobei sowohl die untere Fläche des Außenumfangsteils (125) als auch die untere Fläche des Körperteils (115) der Unterlegscheibe als eine Riffelung, die eine Vielzahl von Zähnen aufweist, konfiguriert sind und wobei die Zähne der unteren Fläche des Außenumfangsteils (125) und diejenigen des Körperteils (125) nahtlos ineinander übergehen.

13. Unterlegscheibe (100, 200, 300, 400) nach einem der vorstehenden Ansprüche, wobei eine Umfangsfläche (135) eines äußeren Rands des Außenumfangsteils der Unterlegscheibe (100, 200, 300, 400) senkrecht zu der unteren Fläche (115, 125) der Unterlegscheibe ausgebildet ist und sich insbesondere nicht in Bezug auf die untere Fläche (115, 125) der Unterlegscheibe verjüngt.

14. Unterlegscheibe (100, 200, 300, 400) nach einem der vorstehenden Ansprüche, wobei die Vorsprünge (130) konfiguriert sind, um mit Fingern des Werkzeugs für das Empfangen des Gegenmoments einzugreifen, um eine Drehung der Unterlegscheibe (100, 200, 300, 400) in Bezug auf das Werkzeug zu unterbinden.

15. Unterlegscheibe (100, 200, 300, 400) nach einem der vorstehenden Ansprüche, wobei die Unterlegscheibe (100, 200, 300, 400) eine obere Fläche, die der Unterseite der Mutter oder des Schraubenkopfs der mit einem Gewinde versehenen Befestigungselementanordnung zugewandt ist, aufweist und wobei eine obere Fläche des Außenumfangsteils (325) und/oder eine obere Fläche des Körperteils (325) der Unterlegscheibe (100, 200, 300, 400) eine dritte Art von den Reibungskoeffizienten vergrößernden Einrichtungen (330, 430) aufweist, um insbesondere eine durch eine Vibration verursachte Losdrehung der fest angezogenen Befestigungselementanordnung zu verhindern.

## Revendications

1. Rondelle (100, 200, 300, 400) destinée à absorber un couple de réaction généré en raison du serrage ou du desserrage d'un élément de fixation fileté, comprenant :
une partie de corps (110) qui s'étend radialement autour d'un axe central (102) de la rondelle (100, 200, 300, 400) ;
un alésage central (105) au sein de la partie de corps (110), configuré pour entourer l'élément de fixation fileté, et aligné avec l'axe central (102) ; et
une partie périphérique extérieure (120) de la rondelle (100, 200, 300, 400), configurée pour s'accoupler mécaniquement avec un outil destiné à absorber le couple de réaction, la partie périphérique extérieure (120) de la rondelle (100, 200, 300, 400) étant constituée de protubérances (130) espacées circonférentiellement, s'étendant vers l'extérieur à partir de la rondelle (100, 200, 300, 400) pour s'accoupler mécaniquement avec l'outil destiné à absorber le couple de réaction, lesdites protubérances (130) espacées circonférentiellement formant des crénelages ; **caractérisée en ce que**
une surface inférieure de la partie périphérique extérieure (125) de la rondelle (100, 200, 300, 400) est configurée, à l'aide d'un premier type de moyen d'augmentation du coefficient de friction, pour interagir avec une surface d'appui destinée à recevoir le couple de réaction.

2. Rondelle (100, 200, 300, 400) selon la revendication 1, une surface inférieure de la partie de corps (115) de la rondelle étant en outre configurée pour interagir avec la surface d'appui à l'aide d'un deuxième type de moyen d'augmentation du coefficient de friction.

3. Rondelle (100, 200, 300, 400) selon la revendication 1 ou 2, le premier type de moyen d'augmentation du coefficient de friction et/ou le deuxième type de moyen d'augmentation du coefficient de friction de la surface inférieure (115, 125) de la rondelle étant structuré(s) et/ou moleté(s) et/ou texturé(s) et/ou cranté(s) au moyen d'une pluralité d'élévations allongées (140) ; et/ou au moyen d'une pluralité de creux allongés.

4. Rondelle (100, 200, 300, 400) selon la revendication 3, chaque élévation (140) respective comprenant un coin et/ou une dent et/ou une arête et/ou un cran.

5. Rondelle (100, 200, 300, 400) selon la revendication 3 ou 4, les élévations allongées (140) ayant une section transversale symétrique et/ou les creux allongés ayant une section transversale symétrique.

6. Rondelle (100, 200, 300, 400) selon les revendications 3 à 5, en vue en plan de la surface inférieure de la rondelle (115, 125), les élévations allongées (140) et/ou les creux allongés et/ou les dents de la surface inférieure de la partie périphérique extérieure (125) et/ou de la partie de corps (115) de la rondelle s'étendant longitudinalement dans une direction allant d'un bord intérieur vers un bord extérieur de la surface inférieure de la rondelle (115, 125) et/ou d'une circonférence intérieure vers une circonférence extérieure de la surface inférieure de la rondelle (115, 125), et s'étendant de préférence entièrement du bord intérieur au bord extérieur de la surface inférieure de la rondelle et/ou s'étendant entièrement d'une circonférence intérieure à une circonférence extérieure de la surface inférieure de la rondelle.

7. Rondelle (100, 200, 300, 400) selon la revendication 6, la direction longitudinale des dents et/ou des élévations allongées et/ou des creux allongés de la surface inférieure de la partie périphérique extérieure et/ou de la partie de corps de la rondelle coïncidant avec des lignes droites.

8. Rondelle (100, 200, 300, 400) selon la revendication 6 ou 7, la direction longitudinale des dents et/ou des élévations allongées et/ou des creux allongés de la surface inférieure de la partie périphérique extérieure et/ou de la partie de corps de la rondelle coïncidant avec des lignes droites s'étendant radialement à partir de l'axe central (102) de la rondelle (100, 200, 300, 400).

9. Rondelle (100, 200, 300, 400) selon les revendications 3 à 8, les dents et/ou les élévations allongées (140), en vue en coupe transversale dans leur direction longitudinale, ayant une forme triangulaire et/ou une forme rectangulaire.

10. Rondelle (100, 200, 300, 400) selon l'une quelconque des revendications 3 à 9, des parties supérieures des dents et/ou des élévations allongées (140) de la surface inférieure de la partie périphérique extérieure (125) et/ou de la partie de corps (115) de la rondelle (100, 200, 300, 400) étant arrondies en vue en coupe transversale dans leur direction longitudinale.

11. Rondelle (100, 200, 300, 400) selon l'une quelconque des revendications 3 à 10, les dents et/ou les élévations allongées (140) de la surface inférieure de la partie périphérique extérieure (125) et/ou de la partie de corps (115) de la rondelle, formant en particulier la surface inférieure structurée et/ou moletée et/ou texturée et/ou crantée de la rondelle, étant disposées séparées les unes des autres, en particulier au moyen d'une partie plane (150) sur la surface inférieure (115, 125) de la rondelle, disposée entre chaque dent et/ou chaque élévation allongée (140).

12. Rondelle (100, 200, 300, 400) selon l'une quelconque des revendications 3 à 11, tant la surface inférieure de la partie périphérique extérieure (125) que la surface inférieure de la partie de corps (115) de la rondelle étant configurées sous forme de crans comprenant une pluralité de dents ; et les dents de la surface inférieure de la partie périphérique extérieure (125) et celles de la partie de corps (125) s'endentant de manière continue.

13. Rondelle (100, 200, 300, 400) selon l'une quelconque des revendications précédentes, une surface circonférentielle (135) d'un bord extérieur de la partie périphérique extérieure de la rondelle (100, 200, 300, 400) étant formée perpendiculairement à la surface inférieure (115, 125) de la rondelle, en particulier de manière à ne pas être conique par rapport à la surface inférieure (115, 125) de la rondelle.

14. Rondelle (100, 200, 300, 400) selon l'une quelconque des revendications précédentes, les protubérances (130) étant configurées pour s'engager avec des doigts de l'outil destiné à absorber le couple de réaction afin d'empêcher la rotation de la rondelle (100, 200, 300, 400) par rapport à l'outil.

15. Rondelle (100, 200, 300, 400) selon l'une quelconque des revendications précédentes, la rondelle (100, 200, 300, 400) comprenant une surface supérieure faisant face à la face inférieure de l'écrou ou de la tête de boulon de l'assemblage d'élément de fixation fileté ; et une surface supérieure de la partie périphérique extérieure (325) et/ou une surface supérieure de la partie de corps (325) de la rondelle (100, 200, 300, 400) comprenant un troisième type de moyen d'augmentation du coefficient de friction (330, 430), en particulier afin d'empêcher la rotation vibrationnelle de l'assemblage d'élément de fixation fileté serré.
